(19) Europäisches Patentamt European Patent Office Office européen des brevets

(11) **EP 2 490 403 A1**

(12) **EUROPEAN PATENT APPLICATION**

(43) Date of publication:
**22.08.2012 Bulletin 2012/34**

(21) Application number: **11305165.0**

(22) Date of filing: **17.02.2011**

(51) Int Cl.:
*H04L 29/08* (2006.01)       *H04L 12/12* (2006.01)
*H04Q 11/00* (2006.01)       *G06F 9/50* (2006.01)
*H04L 12/56* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Post, Georg**
  **91620 Nozay (FR)**
• **Dorize, Christian**
  **91620 Nozay (FR)**

(74) Representative: **Benezeth, Philippe J.L. M. et al**
**Feray Lenne Conseil**
**Le Centralis**
**63 Avenue du Général Leclerc**
**92340 Bourg La Reine (FR)**

Remarks:
Amended claims in accordance with Rule 137(2) EPC.

(54) **Network communication node comprising a plurality of processors for processing layers of communication and associated node**

(57)     An embodiment of the present invention relates on a network communication node receiving data and comprising a plurality of processors aimed at processing said data at a given layer of communication so as to route them towards a given destination. The node determines at least one layer of communication for processing the received data. The node selects a given number of processors to process the data according to the determined layer of communication, switches the selected processors in an active mode to process the determined layer of communication applied to the received data, and switches the selected processors in low consumption mode once processing carried out.

Fig. 5

**Description**

**FIELD OF THE INVENTION**

This invention relates generally to data communications and more particularly to a method and apparatus for processing and rerouting the data packets in a data communication network

**BACKGROUND OF THE INVENTION**

Data communication networks are commonly used to transport data between end users. A source device sends a group of data packets or a stream of data to a recipient device through a connection established in the data communication network. Nodes of the data communication network basically process the transport data of the packet streams at various level of granularity, that is, various traffic volume per aggregate and variable degrees of knowledge and effort required to handle the aggregate. For example, some VLAN low-layer aggregates have only local significance and very simple switching tables, while non-aggregated flows with end-to-end IP address pairs can need a huge routing table to find out what the network node should do. Conversely, an ideal network node would automatically reconfigure its resources so that all layers of networking, from highly power-efficient but wholesale optical wavelength switching to power-hungry but very fine-grained worldwide IP routing, receive exactly the required amount of hardware and power consumption, proportional to demand.

At the time being, new layers for next-generation networks should easily be integrated. Moreover, the packet grooming tasks that manage the multiplexing/demultiplexing of add and drop traffic with the transit traffic, at the optimal layer and pipe size, should operate at the highest efficiency by keeping as much traffic as possible in the lowest, most energy-efficient layers. The electronic implementations are nowadays mostly separate by layer. Parallel processors allow processing a huge routing talk by avoiding an overloading when the data load becomes very large.

But, the overall aggregation tasks are responsible for a large amount of the global consumption at the core network nodes. Conventional equipment often handles packets sequentially on specialized cards and shelves, one per layer of network, using power-hungry chip and module interconnections (backplane line drivers, serializer-deserializer, ...) To enhance the power efficiency, alternative solutions have to be proposed without compromising the layered organization of the network, however. A multi-layer control plane such as the Generalized Multi-Protocol Label Switching (GMPLS) is a standard integrating such new data plane solutions, across all the interfaces between equipments from different vendors.

It is useful now to develop a solution allowing reducing the energy consumption of the packet processing equipment.

**SUMMARY OF THE INVENTION**

One object of this invention is to improve the ability of the processing into the nodes of a data communication network and provide a reduction of the energy consumption in the packet processing equipment.

This is achieved by a method of processing of data received in a network communication node comprising a plurality of processors aimed at processing said data at a given layer of communication so as to route them towards a given destination, the method being characterized in that it comprises the steps of:

- determination of at least one layer of communication for processing the received data,
- selection of a given number of processors to process the data according to the determined layer of communication,
- switching of the selected processors in an active mode to process the determined layer of communication applied to the received data,
- switching of the selected processors in low consumption mode once processing carried out.

With this manner, the present invention proposes to design a better functional block, making its resources shareable and dynamically configurable on multiple layers. Such solution, among others, allows reducing the energy consumption by adapting the number of active processors in function to the layer of communication to process.

According to an aspect of the present invention, the selection of a given number of processors is performed periodically, the same processor being assigned to the processing of different layer of communication at different time. With this manner, a processor may be assigned according to the global need of the node at any time.

According to a further aspect of the present invention, the received data are associated with information identifying the at least one layer of communication to be processed by the said node. With this manner, the node easily identifies the layer of communication to process.

According to another aspect of the present invention, the received data are processed by several layers of communication; the step of selection comprises the selection of a first group of processors performing a first layer of communication and at least a second group of processors performing at least a second layer of communication. With this manner, the node configures its resources, i.e. the available processor according to the different layers of communication to perform. According to an additional aspect of the present invention, the numbers of processors in the group processing each layer are selected so that the time of data processing by groups of processors being appreciably the same one. With this manner, the number of used processors is optimized.

According to another aspect of the present invention, the processing at a given layer of communication comprises the aggregation of several data packets for sending together them towards the given destination. With this manner, several packets of data are processed together in the node and sent together to the next node.

According to a further aspect of the present invention, the processors are gathered in a plurality of clusters of processors located geographically near in the node, the processors selected for processing a given layer of communication being with priority selected in the same cluster. With this manner, the processing between the processors performing the same layer of communication is optimized.

The present invention also refers to a network communication node for processing data received comprising a plurality of processors aimed at processing said data at a given layer of communication so as to route them towards a given destination, the node being characterized in that it comprises:

- means for determination of at least one layer of communication for processing the received data,
- means for selecting of a given number of processors according to the determined layer of communication,
- activation means for switching of the selected processors in an active mode to process the determined layer of communication applied to the received data, and switching of the selected processors in low consumption mode once processing carried out.

## BRIEF DESCRIPTION OF THE DRAWINGS

Figure 1 illustrates a block diagram of a communication data system within which the data are processed by nodes;
Figure 2 illustrates the different types of traffic and layers encountered in a node;
Figure 3 illustrates the traffic splitting among layers within an intermediate node of the system;
Figure 4 illustrates the processing of aggregation through an intermediate node;
Figure 5 illustrates the cross-layer parallel architecture for processing tasks, in accordance with a particular embodiment of the present invention;
Figure 6 illustrates a flow chart of an example process for an exemplary embodiment at the intermediate node Figure 7 illustrates an improvement of the cross-layer parallel architecture for processing tasks;
Figure 8 illustrates the packet processor management and task scheduling in an intermediate node, in accordance with a particular embodiment of the present invention;

## DETAILED DESCRIPTION OF THE INVENTION

The embodiments of the present invention refer to the use of a plurality of processors equipping a node of communication such that the energy consumption power is globally reduced.

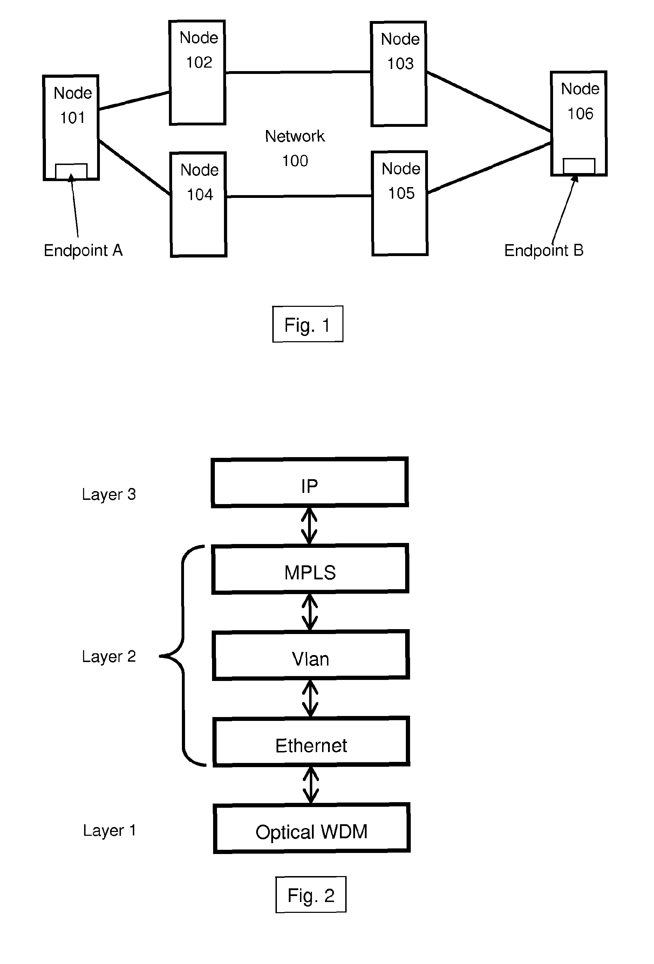

Figure 1 illustrates a block diagram of a general data communication system 100 that includes a plurality of nodes 101-106. The nodes 101-106 are intercoupled in a manner that allows data communication amongst the nodes included in the system 100. In one example a connection may be established between endpoint A and endpoint B. Data being transmitted from endpoint A to endpoint B may traverse the network by starting at node 101, travelling through nodes 102 and 103, and finally arriving at node 106. The intermediate nodes 102-105 being intercoupled, the data may travel through numerous different ways. In the intermediate nodes, the data packets may be aggregated if they travel towards the same node. The communication between the nodes may be by wire (optical or electrical) or wireless.

In each intermediate node 102-105, the data packets are analyzed. According to the processing applied on the data, the data cross one or several logical layers above the physical layer. Above the optical layers that comprise the topology of fibers and the routes of wavelengths, there are different electronic layers of networking, such as Ethernet, Virtual Local Area Network (VLAN), MPLS, IP... These layers are organized as shown in Figure 2. Each layer has its own packet headers and its own view of the network neighborhood. The higher the layer, the more work per packet must generally be done in the interface electronics named "line cards". In particular, packet headers are added and removed or modified in a succession of aggregation and de-aggregation processes between each neighboring layer.

In current equipments, the core routers for example, the packet forwarding process is performed independently at each layer, with at least a dedicated processing unit (card) per layer. Typically, an added or dropped packet flow traverses intermediate cards that correspond to the layer crossing jobs. It must be stressed here that the multiple interconnections between cards are a source of energy efficiency loss due to the need for driving copper lines, serializing parallel data, and protecting each data transfer by means of dedicated error correction techniques.

New network layers - corresponding to new packet headers - may be developed for next generations of networks; for example, the current Internet may become just a minor application on top of them. The hardware provides total flexibility, so that an arbitrary assignment of the current or future layers to processors can be made. Following power-saving design principles, many low-frequency low-voltage circuits advantageously replace few high-frequency processors.

Figure 2 shows the different types of traffic that are encountered in an intermediate network node. The data may cross several sub-layer splitting such as:

- pure optical transit traffic, which does not require any electronic processing (most power efficient processing) and thus remains at the lowest (physical) layer, noted "layer 1 ",
- add or drop traffic (from or to IP packet level), which requires to go through every layer and thus through all grooming stages (least power efficient case),
- intermediate cases for which data processing requires electronic as ,for example, at boundaries between two network domains.
- switching of data from the IP level is the most costly process because it uses huge tables. On the other hand, transit traffic in low layers such as the one that is aggregated in a single wavelength almost requires no electronic effort at all, noted "layer 3".

According to the present invention, the interface modules, i.e. the line cards, commonly use many universally programmable processors driven by scheduling resources that is assigned to any type of packet a programmable local path through assigned processors.

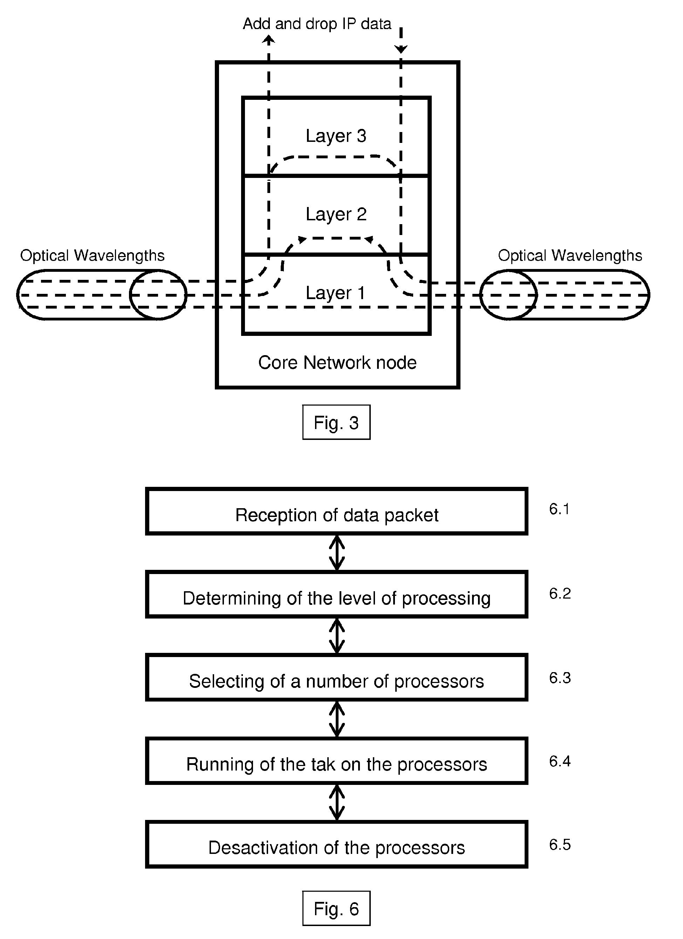

The figure 3 illustrates the traffic splitting among layers within an intermediate node 102-105. At the level of bottom wire (layer 1), the traffic aggregated on one wavelength passes through without any Optical/Electrical/ Optical (O/E/O/) conversion. At the level of middle wire, an O/E/O/ conversion is needed, the data are processed in the layer 2 line card. At the level of the top wire, a complete termination of aggregation up to the IP layer is performed, that requires full node functionalities.

According to the present invention, a certain number of processors are activated according to the layers crossed by the data. To make that, a generic pool of processing resources are shared to perform many different forwarding and cross-layer aggregation tasks: for example, processing at layer 2 and layer 3 use a single common processing platform while maintaining the logical layer separation.

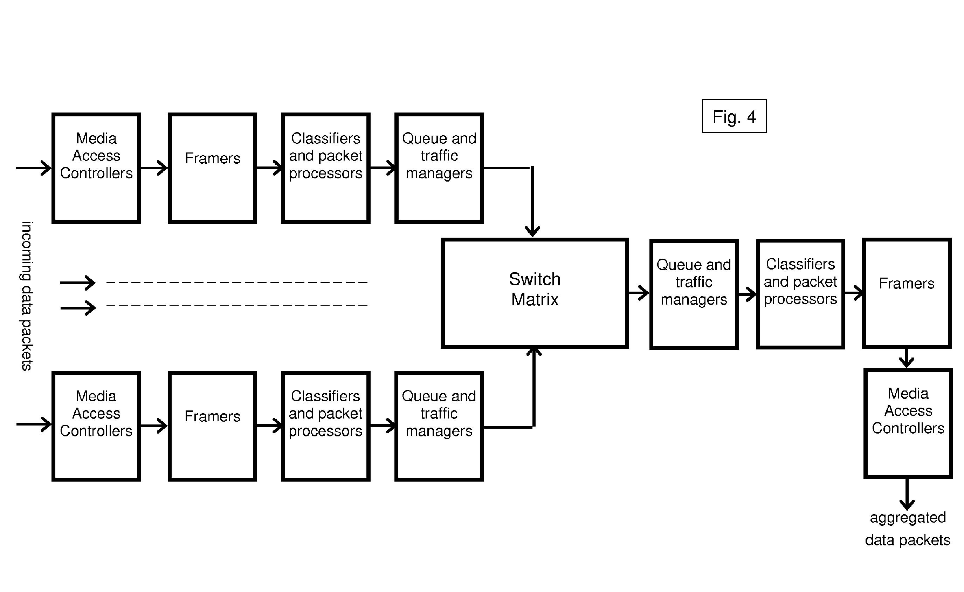

The figure 4 illustrates the processing of aggregation through an intermediate node, in accordance with a particular embodiment of the present invention. The input and output line-cards successively go through the four basic functions:

- media access controlling
- framing of the packets
- classifying of the packets
- managing of the queue of the traffic.

More the processing is performed in high level of layer, more its contribution to resource consumption is high. The most important consumption of resource is used by the upper networking layers, such as IP routing. The present invention proposes to design a better functional block, making its resources shareable and dynamically configurable on multiple layers.

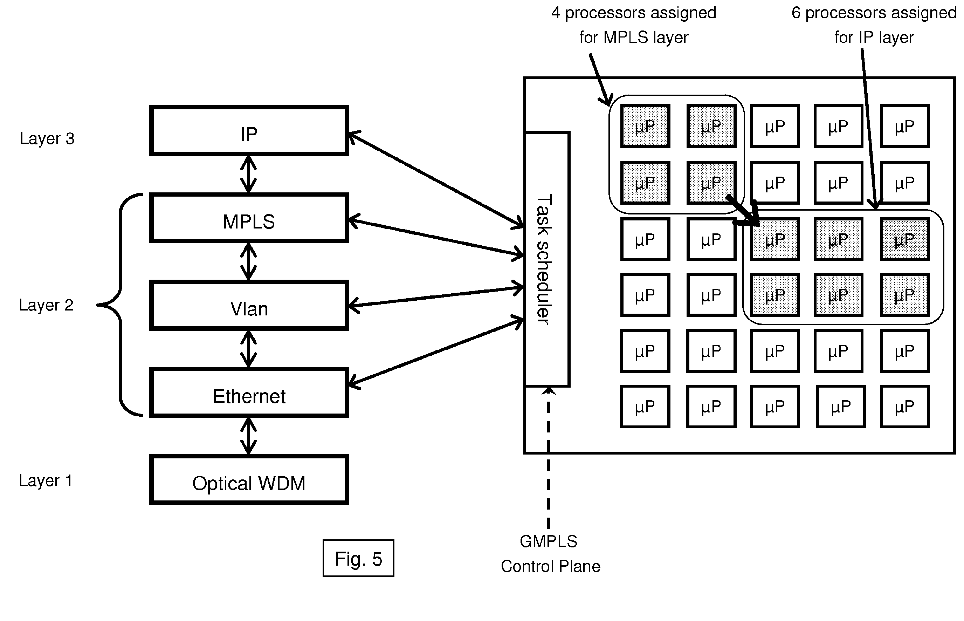

The figure 5 illustrates the cross-layer parallel architecture for processing tasks, in accordance with a particular embodiment of the present invention. The intermediate nodes 102-105 comprise a plurality of processors that are close together on a packet processing card. In a card, or module, three sets of objects cooperate:

- the set of processors (also called processing units),
- the set of tasks (each one associated with a networking layer or with a layer-crossing event),
- the set of packet flows through the unit.

A packet on its way through the module can see a sequence of tasks and walk along a route to different processors. The switch matrix allows collecting data from different packets and put the data in a single packet. Then, this packet passes through the different steps of formatting and is placed in the flow.

At the level of an intermediate node, subsequent tasks can run on the same processor or on different ones that preferably are neighbors. In the simplest cases, designed to be the most frequent ones, the packet sees only one short task, one processor. The dynamic assignments of tasks to processors, and the assignments of packets to a route of pairs (task, processor), are the job of an optimizing task scheduler. The variable paths, or routes, of a packet in the module are a generalization of the well-known packet pipelines. Even if the design seemingly mixes all networking layers on the same chip, the tasks are designed to be logically independent per layer. For example, a task of layer N only touches the packet header for layer N; a task for the transition N+1 to N adds a piece of header for layer N; a task for the transition N to N+1 removes the header belonging to N. The software design neatly respects the layered organization of the network, while the hardware can do anything almost anywhere. This is the reason for the claimed power efficiency of the architecture, which eliminates long transmission lines and their serialization/deserialization between specialized boards.

At the left of the figure 5, a collection of layers that correspond to data tables and to processing tasks on the board is illustrated. Face to the collection of layers and corresponding tasks, the figure 5 shows a task scheduler that manages a pool of processors, for example 30 processors. At a given time instant, each processor is idle state or is assigned to a task and to the processing of a packet. The figure 5 shows a group of 4 processors assigned to the processing of MPLS layer, this group sends the data for processing at the level of IP layer to a group of 6 processors. The cross-layer Control Plane has informed the processor board of the actual aggregation/de-aggregation requirements and provided the forwarding tables for the layers involved. The task scheduler evaluates the amount of processing needed at each layer; it reserves the processing resources for each sub-layer and builds a local path inside the processor board so as to successively perform all aggregation tasks. The data remain inside the processor board until all tasks are achieved.

The figure 5 also shows the packet trajectory through the intermediate node. The first level strips off the Ethernet MAC header, the next level terminates a VLAN and corresponding headers to be stripped off. The third level knows that an MPLS header must be used, and label-switching decides on which tunnel the packet should now travel. Such a packet sees two layer crossing tasks on its way, plus one switching task in a specific layer. Although the packet leaves the chip on the figure 5, it might as well in subsequent on-chip stages be re-multiplexed into some other fat pipe, for example another 10Gb-Ethernet, with or without VLANs. The active processors are drawn in grey in the figure 5. The inactive processors within the considered time frame are turned off (or set to a low power consumption idle mode) by the task scheduler (in white in the figure).

The figure 6 illustrates a flow chart of an example process for an exemplary embodiment at the intermediate node. The data packets are received by the intermediate node (step 6.1). Each incoming data packets is analyzed for determining which layer or inter-layer number (or task identifier) required for processing (step 6.2). Then, at the step 6.3, the task scheduler assigns for each task (i.e. used layer) the appropriate number of processors. The selected processors switch from an idle mode to an activation mode (step 6.4). When the task assigned to one or several processors is ended, the processors switch off and are placed in idle mode.

The task scheduler determines the number of processors assigned to certain tasks according to several constraints :

- processors without a task assignment go to a power-saving sleep state,
- the number of processors per task (or layer) is high enough, with respect to the stochastic process of traffic demand, so that no packet has to wait more than a minimal time (a few microseconds, depending on the Quality of Service
- QoS) for a free processor
- packets may move through a pipeline of more than one processor when they change layers. This is the case of add and drop traffic, corresponding to the aggregation of higher-layer input into a lower-layer pipe, or vice versa the case of the de-aggregation process.
- the task-switching times of the processors, or the wake-up delay from sleep state, should be low: typically 10 microseconds.
- the number of tasks switches and wake-ups per second should be below 1000 or so (to be defined, related to models of power efficiency)
- packets of the same micro-flow, or alternatively the same pair of source and destination address, should never (or below a given probability) be processed out of sequence.

The statistics of traffic, for example its burstiness, are continuously monitored. The number of processors available for processing each layer is overprovisioned with a safety margin that avoids buffering. There are a number of buffers on small on-chip memories; the overhead (delay, power consumption) of external RAMs would be too high. Advantageously, the intermediate node contains more processors than memory buffers to the chip. If the traffic demand exceeds an acceptable load level, compatible with Quality of Service (QoS), and if no sleeping resources are available, any new traffic is discarded and appropriate signaling is sent to the relevant neighbors in the network and to the control plane.

Take an example: at a particular time, the intermediate node illustrated in the figure 5 contains a pool of 30 processors which may be partitioned like this:

| Assigned task | Number of processors | Time of processing per packet |
|---|---|---|
| layer 3 - IP | 2 | 1 $\mu$s per packet |
| layer 2 - MPLS | 6 | 0.3 $\mu$s per packet |
| layer 2 - VLAN | 8 | 0.1 $\mu$s per packet |
| layer 2 - Ethernet | 7 | 0.1 $\mu$s per packet |
| Idle mode | 7 | - - - - - |

The above numbers of processors assigned to each groups is a picture at a very short time (typically, one millisecond), the next moment, the number of processors for each group may be totally changed, and a given processor is assigned to the processing of another layer. The above example corresponds to a node interface where most of the traffic can be passed on in a lower layer (layer 2 - Ethernet) : processing there requires only 10% of the time (and energy) per packet, compared to the higher layer (layer 3). It is the job of the intelligent control plane to manage a good sharing of "lower-layer bypass". With this manner, the node electronics touches the packets at higher layers only when this is absolutely required, to perform the task of add, drop, access aggregation and de-aggregation. In the example above, the intermediate node is not overloaded since it has 7 processors in idle mode.

Multiplexing gain in shared processors, like the one in shared data flows, can schematically be expressed as follows, at a given time instant, processing resource needs for overall aggregation tasks are so that:

$$\underset{All\_sublayers}{Max} \left( \Sigma \ processing\_needs \right) \leq \underset{All\_sublayers}{\Sigma} \left( Max(processing\_needs) \right)$$

For each layer, the maximum number of processors is specified by the manufacturer for a given traffic at a given time instant. The number of processors of the pool is lower or equal than the sum of maximum numbers of processors specified for each layer for a given traffic at a given time instant. With the architecture disclosed for the invention, the number of processors may be optimized regarding the maximum numbers processing the layers for any time.

An enhanced control plane transmits GMPLS information identifying the type of processing task for each received packet flow. According to a simple mode of embodiment, the GMPLS information may be a binary flags field specifying the layers has to be processed by the intermediate node. Thank to this information, the task scheduler allocates resources for processing the identified layers at the level of intermediate node. With this manner, the task scheduler that shares the processors between the different layers is aware of which layers each data packet has to cross. According to a variant, the control plane may also supply the task scheduler with the required switching tables and packet handling rules. It can be coupled to a global on-line optimization software that maps the network's traffic-demand and physical resources onto power-efficient layered logical topologies. As far as possible, low-layer bypass paths are created and the task scheduler receives updated decision look-up tables from the control plane. Due to the top-down control, the same group of processors can handle packets on different cleanly separated layers.

According to a main aspect of the invention, the unused processors are turned off, so as to further decrease the power consumption. The task manager periodically scans the state of the processor by a traffic detector at each layer/sub-layer which allows the task scheduler to share the tasks between the processors, and switches the unused processor in an idle mode. Typically, the task manager scans the traffic 1000 times per second.

Packets can typically be handled as transit-traffic (input and output in the same layer), add-traffic (higher layer input, then multiplexing into a lower-layer output stream) or drop-traffic (low-layer aggregate is demultiplexed into higher layer subsets). The amount of saved power also depends on the quality of the above-mentioned optimizer software that creates and dimensions the low-layer paths in the first place. Such an optimization is not part of this description, but there are other efforts under way to integrate optical-path and packet-transport optimizers, and even to enhance the GMPLS control plane with relevant message types.

The task scheduler manages the analyzing of the input data and takes decision for the processing. The decisions are triggered by packet events: either incoming packets from a physical interface, or packets moving inside the chip along a "pipelined path". The task manager performs the following tasks:

-   check the type of layer, i.e. the type of relevant packet header,

- compute the hash value, then look up the processor assigned to this pair (layer, hash-value). With this manner, the tack scheduler can share the task on several processors,
- if no processor is assigned, wake up a sleeping processor, and update the hash-value-to-core mapping,
- if the assigned processor is busy but a buffer space is available, queue the packet for that processor,
- if no processor and no buffer are available, discard packet and send alarms.

To simplify the processing of the task scheduler, the determination of the number of processors to activate is driven by lookup tables. The lower the layer, the simpler the table. For each received packet, the following task will be performed:

- address the table using fields from the packet header,
- retrieve action codes: how to modify the current header (push, pop, swap some fields for example), what next step for the packet (continue on-chip, transfer to specific card interface, shape, police, discard...),
- apply any chosen shaping/policing filters (example: leaky buckets),
- update statistics counters.

Based on the decision taken by the task scheduler, the pool of processor receives and emits specialized messages. In particular, most table entries are fed from the control plane's "Forwarding Information Bases". Here are the events sent by the task scheduler:

- send alarms, answer queries about statistics per layer
- create, modify, destroy layers and lookup table entries, whenever requested by the control plane
- modify QoS related parameters (e.g. in filters) on request.

Moreover, time-out events are performed at the level of each processors of the processor core. For example, if a processor or a buffer space is unused for more than a certain time, they are put to sleep and the mappings from hash values to those pieces of hardware are deleted.

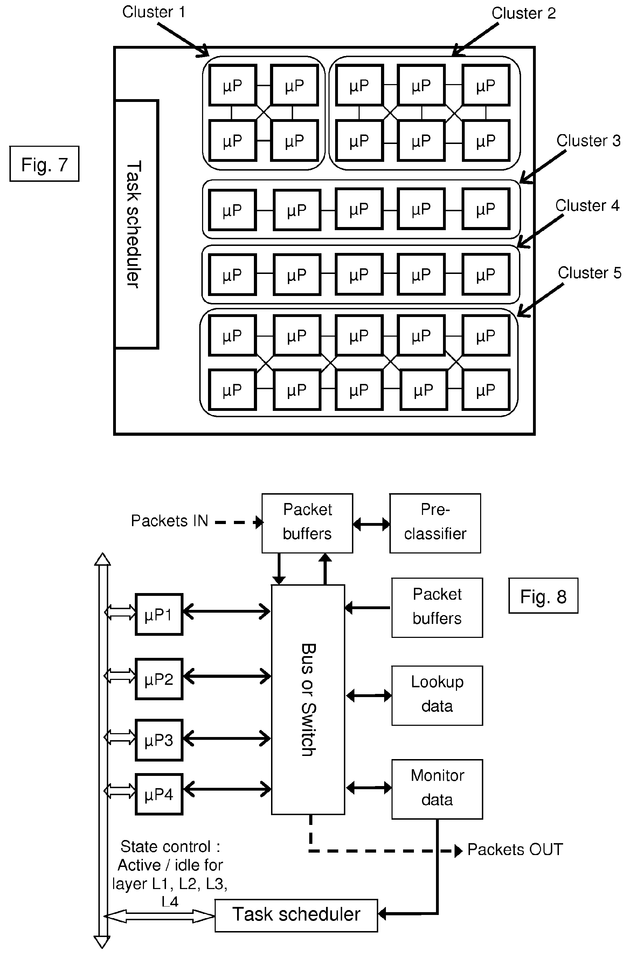

The figure 7 illustrates a cross-layer parallel architecture according to an improvement of the present invention. Once the task scheduler determines the number of processors associated with a certain task, it jointly selects them according to a strategy of allowance of the processors based on their proximity (from a card architecture point of view) in order to maximize the processing efficiency. For example, if the tack scheduler needs five processors to process a task, it selects five geographically close processors within the pool. According to this improvement, the task scheduler defines a number of clusters of processors which are firstly intended to work together, of the fact for example of their geographical proximity within the node of communication. The proximity of the processors is advantageous in term of consumption of energy because the data flows on a short distance between the processors. For example, let us suppose that the pool of processors is divided into 10 clusters of 50 processors and, at a given time instant that in each cluster a certain number of processors are activated:

| C1 | C2 | C3 | C4 | C5 | C6 | C7 | C8 | C9 | C10 |
|---|---|---|---|---|---|---|---|---|---|
| 45 | 10 | 48 | 22 | 47 | 42 | 38 | 43 | 45 | 37 |

If the incoming of new data packets requires the activation of 8 processors, the task scheduler preferably activates 8 processors of the same cluster, by example: cluster 2,4,6,7 or 10. the cluster 6 will be selected in priority in order to occupy it to the maximum and thus to make it possible to leave the maximum of possibilities for the other clusters.

The figure 8 illustrates the packet processor management and task scheduling an intermediate node. Four processors are shown. They access and maintain common resources like program code, lookup tables, traffic monitoring results, etc. Incoming packets are pre-classified in a simple logic part that fixes the initial layer they belong to. Eventually packets are buffered, if no processor for the intended layer or layer-transition is available. Processors are dynamically assigned to packet tasks on one of the implemented layers, or to an idle power-saving state, if there is no need for all processors. According to an improvement, the program code of a processor is downloaded from a memory to be configured for the processing of a determined layer.

Packets are routed to a processor that handles their layer's forwarding job, with layer-specific program code and lookup data. Depending on configuration, a packet may change layers during processing and may be routed through more than one processor. For example, the packet enters on layer L1 through processor P3, which then hands it over on L2 to P4, and finally is routed to and processed in P1, using another variant of layer code L1. This corresponds to a moderately complex switching operation: de-multiplexing from a large L1 traffic aggregate, followed by re-multiplexing into another large aggregate. The task scheduler defines which processors are allocated to which layers or layer pairs (and eventually to which sub-program on the layer, if there are several branches).

For clarity, the interfaces to the control plane are not shown on Figure 8. The task scheduler tells to the preclassifer the packets which initial processor is available to them. The tasks may be responsible for the main classification of the packets, header insertion/deletion/modification, according to the packet's layer, and the look-up of destination routes, forwarding classes, queues. The packet processor management may be completely reconfigurable for the probable case that new intermediate layers of networking are added. Moreover, old Internet protocols may be downgraded merely to specialized legacy applications on top of them. Equipment can be more compact and power efficient through resource sharing and re-use, while the logic of neatly separated networking layers and minimal interfaces is strictly preserved.

Where a component (e.g. an assembly, device, memory, etc.) is referred to above, unless otherwise indicated, reference to that component (including a reference to a "means") should be interpreted as a reference to any component which performs the function of the described component (i.e. is functionally equivalent to the described component), including components which are not structurally equivalent to the disclosed structure which performs the function in the illustrated exemplary embodiments of the invention. Where a step in a method is referred to above, unless otherwise indicated, reference to that step should be interpreted as a reference to any step which achieves the same result as the step (i.e. is functionally equivalent to the described step), including steps which achieve a stated result in different ways from those disclosed in the illustrated exemplary embodiments of the invention. As will be apparent to those skilled in the art in the light of the foregoing disclosure, many alterations and modifications are possible in the practice of this invention.

**Claims**

1. Method of processing of data received in a network communication node comprising a plurality of processors aimed at processing said data at a given layer of communication so as to route them towards a given destination, the method being **characterized in that** it comprises the steps of:

   - determination (6.2) of at least one layer of communication for processing the received data,
   - selection (6.3) of a given number of processors to process the data according to the determined layer of communication,
   - switching (6.4) of the selected processors in an active mode to process the determined layer of communication applied to the received data,
   - switching (6.5) of the selected processors in low consumption mode once processing carried out.

2. Method of data processing in accordance with claim 1, **characterized in that** selection of a given number of processors is performed periodically, the same processor being assigned to the processing of different layer of communication at different time.

3. Method of data processing in accordance with claim 1 or 2, **characterized in that** the received data are associated with information identifying the at least one layer of communication to be processed by the said node.

4. Method of data processing in accordance with one of the previous claims, **characterized in that** the received data are processed by several layers of communication, the step of selection comprising the selection of a first group of processors performing a first layer of communication and at least a second group of processors performing at least a second layer of communication.

5. Method of data processing in accordance with claim 4, **characterized in that** the numbers of processors in the group processing each layer are selected so that the time of data processing by groups of processors being appreciably the same one.

6. Method of data processing in accordance with one of the previous claims, **characterized in that** the processing at a given layer of communication comprises the aggregation of several data packets for sending together them towards the given destination.

7. Method of data processing in accordance with one of the previous claims, **characterized in that** the processors are gathered in a plurality of clusters of processors located geographically near in the node, the processors selected for processing a given layer of communication being with priority selected in the same cluster.

8. Network communication node (102; 103; 104; 105) for processing data received comprising a plurality of processors aimed at processing said data at a given layer of communication so as to route them towards a given destination, the node being **characterized in that** it comprises:

- means for determination of at least one layer of communication for processing the received data,
- means for selecting of a given number of processors according to the determined layer of communication,
- activation means for switching of the selected processors in an active mode to process the determined layer of communication applied to the received data, and switching of the selected processors in low consumption mode once processing carried out.

9. Network communication node (102; 103; 104; 105) in accordance with claim 8, **characterized in that** the selection of a given number of processors is performed periodically, the same processor being assigned to the processing of different layer of communication at different time.

10. Network communication node (102; 103; 104; 105) in accordance with claim 8 or 9, **characterized in that** it comprises a means for receiving information associated with the received data identifying the at least one layer of communication to be processed by the node.

11. Network communication node (102; 103; 104; 105) in accordance with claim 8 to 10, **characterized in that** the received data are processed by several layers of communication, a first group of processors is selected for performing a first layer of communication and at least a second group of processors is selected for performing at least a second layer of communication.

12. Network communication node (102; 103; 104; 105) in accordance with claim 11, **characterized in that** the numbers of processors in the group performing each layer are selected so that the time of data processing by groups of processors being appreciably the same one.

13. Network communication node (102; 103; 104; 105) in accordance with claim 8 to 12, **characterized in that** the processors selected for a given layer of communication perform the aggregation of several data packets for sending together them towards the given destination.

14. Network communication node (102; 103; 104; 105) in accordance with claim 8 to 13, **characterized in that** the communication node is equipped with a number of processors calculated from the total of the processors required for the processing of the maximum of traffic for each layer of communication during the same time period.

15. Network communication node (102; 103; 104; 105) in accordance with claim 8 to 14, **characterized in that** the processors are gathered in a plurality of clusters of processors located geographically near in the node, the processors selected for processing a given layer of communication being with priority selected in the same cluster.

**Amended claims in accordance with Rule 137(2) EPC.**

**1.** Method of processing of data received in a network communication node comprising a plurality of processors aimed at processing said data at a given layer of communication so as to route them towards a given destination, the method comprising the steps of:

- determination (6.2) of at least one layer of communication for processing the received data,
- selection (6.3) of a given number of processors to process the data according to the determined layer of communication,
- switching (6.4) of the selected processors in an active mode to process the determined layer of communication applied to the received data,
- switching (6.5) of the selected processors in low consumption mode once processing carried out, **characterized in that** the processors are gathered in a plurality of clusters of processors located geographically near inside the node, the processors selected for processing a given layer of communication belonging to the same cluster.

**2.** Method of data processing in accordance with claim 1, **characterized in that** selection of a given number of processors is performed periodically, the same processor being assigned to the processing of different layer of communication at different time.

**3.** Method of data processing in accordance with claim 1 or 2, **characterized in that** the received data are associated with information identifying the at least one layer of communication to be processed by the said node.

**4.** Method of data processing in accordance with one of the previous claims, **characterized in that** the received data are processed by several layers of communication, the step of selection comprising the selection of a first group of processors performing a first layer of communication and at least a second group of processors performing at least a second layer of communication.

**5.** Method of data processing in accordance with claim 4, **characterized in that** the numbers of processors in the group processing each layer are selected so that the time of data processing by groups of processors being appreciably the same one.

**6.** Method of data processing in accordance with one of the previous claims, **characterized in that** the processing at a given layer of communication comprises the aggregation of several data packets for sending together them towards the given destination.

**7.** Network communication node (102; 103; 104; 105) for processing data received comprising a plurality of processors aimed at processing said data at a given layer of communication so as to route them towards a given destination, said node comprising:

- means for determination of at least one layer of communication for processing the received data,
- means for selecting of a given number of processors according to the determined layer of communication,
- activation means for switching of the selected processors in an active mode to process the determined layer of communication applied to the received data, and switching of the selected processors in low consumption mode once processing carried out, **characterized in that** the means for selecting gathers processors in a plurality of clusters of processors located geographically near inside the node, the processors selected for processing a given layer of communication belonging to the same cluster.

**8.** Network communication node (102; 103; 104; 105) in accordance with claim 7, **characterized in that** the selection of a given number of processors is performed periodically, the same processor being assigned to the processing of different layer of communication at different time.

**9.** Network communication node (102; 103; 104; 105) in accordance with claim 7 or 8, **characterized in that** it comprises a means for receiving information associated with the received data identifying the at least one layer of communication to be processed by the node.

**10.** Network communication node (102; 103; 104; 105) in accordance with claim 7 to 9, **characterized in that** the received data are processed by several layers of communication, a first group of processors is selected for performing a first layer of communication and at least a second group of processors is selected for performing at least a second layer of communication.

**11.** Network communication node (102; 103; 104; 105) in accordance with claim 10, **characterized in that** the numbers of processors in the group performing each layer are selected so that the time of data processing by groups of processors being appreciably the same one.

**12.** Network communication node (102; 103; 104; 105) in accordance with claim 7 to 11, **characterized in that** the processors selected for a given layer of communication perform the aggregation of several data packets for sending together them towards the given destination.

**13.** Network communication node (102; 103; 104; 105) in accordance with claim 7 to 12, **characterized in that** the communication node is equipped with a number of processors calculated from the total of the processors required for the processing of the maximum of traffic for each layer of communication during the same time period.

Fig. 1

Fig. 2

Add and drop IP data

Optical Wavelengths

Layer 3

Layer 2

Optical Wavelengths

Layer 1

Core Network node

Fig. 3

| | |
|---|---|
| Reception of data packet | 6.1 |
| Determining of the level of processing | 6.2 |
| Selecting of a number of processors | 6.3 |
| Running of the tak on the processors | 6.4 |
| Desactivation of the processors | 6.5 |

Fig. 6

Fig. 4

incoming data packets

aggregated data packets

Fig. 5

Layer 3 — IP

Layer 2 — MPLS, Vlan, Ethernet

Layer 1 — Optical WDM

Task scheduler

GMPLS Control Plane

4 processors assigned for MPLS layer

6 processors assigned for IP layer

EP 2 490 403 A1

14

Fig. 7

Cluster 1

Cluster 2

Cluster 3

Cluster 4

Cluster 5

Task scheduler

μP μP μP μP μP

μP μP μP μP μP

μP μP μP μP μP

μP μP μP μP μP

μP μP μP μP μP

μP μP μP μP μP

Packets IN

Packet buffers

Pre-classifier

Packet buffers

Fig. 8

Bus or Switch

μP1

μP2

μP3

μP4

Lookup data

Monitor data

State control :
Active / idle for
layer L1, L2, L3,
L4

Packets OUT

Task scheduler

Europäisches
Patentamt

European
Patent Office

Office européen
des brevets

# EUROPEAN SEARCH REPORT

Application Number

EP 11 30 5165

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/227771 A1 (RAGHUNATH ARUN [US] ET AL) 12 October 2006 (2006-10-12)<br>* paragraphs [0012] - [0015] *<br>* paragraphs [0022], [0028], [0041] *<br>* paragraphs [0049] - [0067] *<br>* paragraphs [0067] - [0074] *<br>* paragraph [0076] *<br>* figure 3 *<br>----- | 1-15 | INV.<br>H04L29/08<br>H04L12/12<br>H04Q11/00<br>G06F9/50<br>H04L12/56 |
| A | BOLLA R ET AL: "Performance and power consumption modeling for green COTS Software Router",<br>COMMUNICATION SYSTEMS AND NETWORKS AND WORKSHOPS, 2009. COMSNETS 2009. FIRST INTERNATIONAL, IEEE, PISCATAWAY, NJ, USA,<br>5 January 2009 (2009-01-05), pages 1-8,<br>XP031445318,<br>ISBN: 978-1-4244-2912-7<br>* Sections I-III *<br>----- | 1-15 | |
| A | GANGXIANG SHEN ET AL: "Energy-Minimized Design for IP Over WDM Networks",<br>IEEE/OSA JOURNAL OF OPTICAL COMMUNICATIONS AND NETWORKING, IEEE, USA,<br>vol. 1, no. 1, 1 June 2009 (2009-06-01), pages 176-186, XP011262125,<br>ISSN: 1943-0620<br>* Sections I-III *<br>----- | 1-15 | TECHNICAL FIELDS SEARCHED (IPC)<br><br>H04L<br>G06F<br>H04Q |

The present search report has been drawn up for all claims

| Place of search | Date of completion of the search | Examiner |
|---|---|---|
| Munich | 20 July 2011 | Veloso González, J |

EPO FORM 1503 03.82 (P04C01)

**ANNEX TO THE EUROPEAN SEARCH REPORT
ON EUROPEAN PATENT APPLICATION NO.**

EP 11 30 5165

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2011

| Patent document cited in search report | Publication date | Patent family member(s) | Publication date |
|---|---|---|---|
| US 2006227771 A1 | 12-10-2006 | US 2009235050 A1 | 17-09-2009 |

EPO FORM P0459